# EUROPEAN PATENT APPLICATION

(11) **EP 3 409 968 A1**
(43) Date of publication of application: **05.12.2018**
(21) Application number: 18175488.8
(22) Date of filing: 01.06.2018
(51) Int. Cl.: F16D 65/092, F16D 65/097

(54) **A BRAKE PAD**

(30) Priority: 02.06.2017 GB 201708862
(71) Applicant: Meritor Heavy Vehicle Braking Systems (UK) Limited, Cwmbran, Gwent NP44 3XU (GB)
(72) Inventor: Knoop, Dietmar, Cwmbran, Gwent NP44 3XU (GB); Cleary, Sean, Cwmbran, Gwent NP44 3XU (GB); Hubbard, Dave, Cwmbran, Gwent NP44 3XU (GB)
(74) Representative: Foot, Paul Matthew James

(57) **Abstract**

The present invention relates to a backplate (16) for a brake pad of a disc brake, a brake pad comprising the backplate and the method of manufacturing the backplate. The backplate comprises a rear wall (16a) comprising an inner surface to support a friction material (13) and an opposing, outer surface. The backplate may further comprise at least one stiffening rib (16d) formed on the outer surface of the rear wall (16a) . The backplate may further or alternatively comprise at least one stiffening flange (16b) extending from the inner surface side of the rear wall. The rear wall (16a) and flange (16b) define a trough (16c) for accommodating at least one functional component of a brake pad between the inner surface of the rear wall and friction material.

## Description

### FIELD OF THE INVENTION

The present invention relates to a brake pad for a disc brake. In addition, the present invention relates to a backplate for a brake pad of a disc brake and method of manufacture.

### BACKGROUND OF THE INVENTION

Brake pads for a disc brake typically comprise a backplate and a layer of friction material.

The friction material is secured to the backplate and has a friction face that engages a rotor during braking. The friction material wears during use and so brake pads conventionally have a wear limit to avoid disc brake damage or failure.

The backplate must have sufficient strength and integrity to withstand the forces acting on the brake pad during braking, and also forces acting on the travelling vehicle in which the brake pad is fitted. Commonly this is achieved by using a backplate formed from a relatively thick metal plate (for example, a cast or stamped steel plate that is approximately 8mm - 10mm thick). However, such a thick metal backplate is costly in materials and expensive to manufacture. The thick metal backplate increases the overall mass of the brake pad, which is undesirable. The thick metal backplate also contributes substantially to the overall thickness of the brake pad, which consequently restricts the thickness of sacrificial frictional material that can be secured to the backplate and therefore limits the lifespan of the brake pad.

The present invention seeks to overcome or at least mitigate the problems of the prior art.

### SUMMARY OF THE INVENTION

A first aspect of the present invention relates to a backplate for a brake pad of a disc brake.

The backplate comprises a rear wall with an inner surface for supporting a friction material and an opposing, outer surface. When the backplate is mounted in the disc brake for use, the inner surface faces towards a brake rotor and the outer surface faces away from the rotor.

In an embodiment, the backplate may comprise a first side surface for contacting a first abutment of the disc brake when the backplate is mounted in the disc brake for use, and an opposing second side surface for contacting a second abutment of the disc brake when the backplate is mounted in the disc brake for use.

In an embodiment, the backplate may further comprise a third side surface for contacting a third abutment of the disc brake when the backplate is mounted in the disc brake for use, and an opposing fourth side surface for contacting a fourth abutment of the disc brake when the backplate is mounted in the disc brake for use.

In an embodiment, the backplate may further comprises at least one stiffening rib to provide a stiffening effect on the backplate. As a consequence, the thickness of the rear wall can be reduced without compromising the strength and integrity of the backplate.

Preferably, the at least one stiffening rib may be configured to strengthen the backplate with respect to forces acting on the backplate during operation. For example, the at least on stiffening rib may be configured to strengthen the backplate with respect to a retaining force, an applied clamping force, a drag braking force and/or an abutment force.

Preferably, the at least one stiffening rib may be configured so as to improve the noise behaviour of the backplate during use.

During braking, a clamping force is applied to the backplate so as to move the brake pad towards the rotor. When the brake pad contacts the rotor, a drag braking force is generated due to the friction between the friction material and the rotor. The drag braking force acts on the disc brake in a tangential direction to the rotating rotor. Due to the rotational path of the rotor, the direction of the drag braking force changes across the rear wall and can be plotted as a vector pathway. The drag braking force may cause the backplate to move in a circumferential direction towards the first abutment or second abutment depending on the rotating direction of the rotor. However, the circumferential movement of the backplate is impeded by an abutment counteracting force. Depending on the eigen frequency of the backplate, the backplate may produce an audible squeal noise during use.

To optimise the strengthening of the rear wall and improve the force distribution across the backplate, the at least one stiffening rib may be an elongate rib configured to extend at least substantially across the rear wall between the first side surface and the second side surface.

The at least one stiffening rib may comprise a plurality of stiffening ribs wherein a first stiffening rib is configured to extend at least substantially across the rear wall between the first side surface and the second side surface of the backplate and a second stiffening rib is configured to extend at least substantially across the rear wall between the third side surface and the fourth side surface of the backplate.

To enhance the stiffening effect of the at least one rib with respect to the drag braking force acting on the backplate, the at least one stiffening rib may be an elongate rib configured to follow at least a portion of the vector pathway of the drag braking force acting across the rear wall. The vector pathway may follow a curved path across the rear wall and the elongate rib may be a curved elongate rib.

To improve the stiffening effect of the at least one rib with respect to the abutment force acting on the backplate and help minimise plastic deformation of the backplate by the abutments of the disc brake, the at least one stiffening rib may be a rib orientated on the rear wall to perpendicularly intersect the first and/or second side surface, or alternatively the third and/or fourth side surface.

If the brake pad is to be held within the disc brake by a pad retainer, the backplate preferably comprises an interface to form a mating contact with the pad retainer and the at least one stiffening rib may be configured to strengthen the rear wall with respect to a retaining force applied by the pad retainer. The at least one stiffening rib may be a localised rib arranged in a region of rear wall adjacent to the interface.

To optimise the stiffening effect of the at least one localised rib with respect to the retaining force acting on the backplate and help minimise plastic deformation of the backplate by the pad retainer, the at least one localised rib may be orientated to perpendicularly intersect the interface.

To improve the noise behaviour of the backplate, the at least one stiffening rib may be configured so as to adapt the eigen frequency and thereby tune the backplate. By tuning the backplate, audible squeal noises are preferably minimised.

Preferably, the at least one stiffening rib is formed on the outer surface of the rear wall. The at least one rib may comprise a recess and/or ridge formed in the rear wall. The recess/ridge may have any suitable cross-sectional profile, including a circular profile, flat-bottomed/flat-topped profile or saw-tooth profile. The at least one stiffening rib may comprise a recess arranged in the outer surface or inner surface of the rear wall, the recess forming a corresponding ridge on the opposing inner surface or outer surface of the rear wall. The ridge or recess arranged on the inner surface of the rear wall may advantageously aid the attachment of the friction material and/or other functional component of the brake pad to the inner surface of the rear wall.

The first side surface of the backplate may be a first circumferential side surface for contacting a first circumferential abutment. The second side surface of the backplate may be a second circumferential side surface for contacting a second circumferential abutment. The first circumferential side surface and second circumferential side surface may be generally curved and/or generally linear. If both are generally curved, the first and second circumferential side surfaces may have generally the same radius of curvature or a different radius of curvature.

In an embodiment, the first side surface of the backplate is a first circumferential side edge portion of the rear wall and the second side surface of the backplate is a second, opposing circumferential side edge portion of the rear wall.

The third side surface of the backplate may be a first radial side surface for contacting a first radial abutment. The fourth side surface of the backplate may be a second radial side surface for contacting a second radial abutment. The first radial side surface and second radial side surface may be generally curved and/or generally linear. If both are generally curved, the first and second radial side surfaces may have generally the same radius of curvature or a different radius of curvature. The first and second radial surfaces may be separated by a link portion. The link portion may be arched so that the backplate can clear the rotating parts of the disc brake when mounted for use.

In an embodiment, the third side surface of the backplate is a first radial side edge portion of the rear wall and the fourth side surface of the backplate is a second, opposing radial side edge portion of the rear wall.

The first circumferential side edge portion and first radial flange side edge portion may be contiguous. Likewise, the second circumferential side edge portion and second radial side edge portion may be contiguous.

The backplate may comprise at least one stiffening flange extending from the inner surface side of the rear wall. Advantageously, the at least one flange provides an additional stiffening effect on the backplate and so the thickness of the backplate may be even further reduced whilst maintaining sufficient strength and integrity.

The rear wall and at least one stiffening flange are preferably integrally formed. The at least one stiffening flange may extend substantially perpendicularly from the rear wall.

The at least one stiffening flange may extend around a perimeter portion of the rear wall.

In an embodiment, the at least one stiffening flange comprises a first circumferential flange portion forming the first side surface of the backplate for abutting a first circumferential abutment and comprises a second, opposing circumferential flange portion forming the second side surface of the backplate for abutting a second circumferential abutment.

In an embodiment, where the backplate comprises a third side surface and fourth side surface, the at least one stiffening flange comprises a first radial flange portion forming the third side surface of the backplate for abutting a first radial abutment and comprises a second radial flange portion forming the fourth side surface of the backplate for abutting a second radial abutment.

The first circumferential flange portion and first radial flange portion may be contiguous. Likewise, the second circumferential flange portion and second radial flange portion may be contiguous.

In an alternative embodiment, the at least one stiffening flange is a peripheral flange substantially encircling the perimeter of the rear wall. The first side surface may be a first circumferential portion of the peripheral flange and the second side surface may be a second, opposing circumferential portion of the peripheral flange. The third side surface may be a first radial portion of the peripheral flange and the fourth side surface may be a second radial portion of the peripheral flange.

In addition to the stiffening effect, the at least one stiffening flange is also preferably configured to increase the contact area of the side surfaces of the backplate with the corresponding abutments, thereby enhancing the reaction of drag braking force from the backplate to the disc brake during braking.

Together, the rear wall and at least one flange define a trough on the inner surface side of the rear wall. The trough defined by the rear wall and peripheral flange has a tub shape. The trough is preferably configured to accommodate at least one brake pad functional component between the friction material and rear wall of the backplate. The at least one functional component are configured in the trough so as to enhance the operation of the friction material. The trough may be configured to accommodate at least one functional component selected from a bonding to bond friction material to the inner surface of the rear wall (e.g. bonding glue or mechanical hooks), a thermal insulator to inhibit the transfer of heat from the friction material to the backplate and/or a noise dampener to absorb noise generated by the brake pad and/or alter the resonant frequency of the brake pad.

The trough may be configured to additionally accommodate a rear portion of friction material such that a front portion of friction material protrudes from the backplate. The rear portion of the friction material may be wear limit portion of the friction material. An outer edge of the peripheral flange may define the wear limit of the friction material. In an alternative embodiment, an exposed section of the backplate may be configured to indicate the reach of the wear limit of the friction material by means of a noise or sensor contact.

By forming the trough with the rear wall, the flange is able to provide additional mechanical contact between the friction material and the backplate, aid bonding, and reduce the risk of the friction material becoming separated from the backplate when subject to shear forces during braking.

Preferably the trough is substantially filled by the at least one functional component, and optionally the rear portion of the friction material. By substantially filling the trough, the stiffening of the flange is improved and risk of plastic deformation is reduced.

Preferably, the trough is substantially filled to reduce the ingress of water and/or foreign matter in the brake pad and minimise corrosion.

By recessing the at least one functional component (e.g. at least one of the bonding, the thermal insulator and/or the noise dampener), and optionally the rear portion of friction material, the backplate allows the thickness of sacrificial friction material for the brake pad to be optimised and the lifespan of the brake pad to be extended.

The stiffening effect of the at least one stiffening rib and/or at least one stiffening flange, allows for the thickness of the backplate material to be reduced whilst maintaining a backplate with sufficient strength and integrity to withstand the braking forces and travel forces acting on the vehicle in which the disc brake is fitted.

The stiffening effect of the at least one stiffening rib and/or at least one flange allows for the backplate to be formed from sheet metal material. The sheet metal material may have a relatively thin thickness of approximately 4mm or less. The sheet metal material may have a thickness in the range of approximately 1mm and 4mm, preferably between approximately 2mm and approximately 3mm. The sheet metal material may be sheet steel. The trough may have a depth in the range of approximately 5mm to 7mm.

In an embodiment, the backplate comprises a press-formed body of sheet metal.

By using relatively thin sheet metal the overall mass of the backplate is minimised, which in turn leads to environmental and costs benefits. Also, the backplate may be press-formed from the sheet metal and cheap to manufacture.

A second aspect of the present invention relates to a brake pad comprising the backplate according to the first aspect of the invention.

In an embodiment, the backplate may be formed from sheet metal material having a thickness of approximately 4mm or less; and comprises a rear wall having an inner surface for supporting friction material, and at least one flange extending from the inner surface side of the rear wall.

In an embodiment, the backplate comprises a rear wall having an inner surface to support a friction material and an opposing, outer surface; and at least one stiffening rib formed in the outer surface of the rear wall.

The brake pad may be an inboard brake pad or an outboard brake pad.

A third aspect of the present invention relates to a disc brake comprising a brake pad according to the second aspect of the invention.

A fourth aspect of the present invention relates to a method of press-forming a backplate from a blank of sheet metal material.

The method may comprise the step of cutting the blank of sheet metal material.

The method may further comprise step of pressing the blank to form at least one ridge and/or recess so as to define at least one stiffening rib.

The method may further or alternatively comprise the step of pressing to turn a border region of the blank at an angle from a central rear wall region to form at least one stiffening flange extending from the inner side of the rear wall.

A fifth aspect of the present invention provides a heavy vehicle disc brake, the disc brake comprising: first and second brake pads for selectively contacting opposing inboard and outboard faces of a brake rotor respectively; a brake caliper for confining the first and second brake pads in at least an inboard-outboard direction; an actuation mechanism housed within the brake caliper for selectively bringing the brake pads into contact with the rotor; and a first and a second brake pad support structures for restraining the first and second brake pads in a circumferential direction respectively; wherein at least one of the first and second brake pads and the corresponding first and second support structures comprise complementary profiles on circumferential faces thereof arranged so as to permit the brake pad to be inserted into the mounting structure in a transverse direction of the pad and at an angle to the circumferential direction of the structure and then for the brake pad to be pivoted about a fixed centre of rotation when a circumferential surface of the brake pad is in contact with a complementary circumferential surface of the structure to be brought into a fitted position in the structure.

Advantageously this arrangement allows the brake pad to be fitted to the caliper in a manner that is less prone to jamming than the known radial way and may make fitting in the wrong orientation less likely or impossible due to there being more visual and mechanical clues of any such error. Further the arrangement may permit a smaller, simpler and lighter pad retainer to be used.

The complementary circumferential surface of the structure may define an undercut for receiving the brake pad.

At least one brake pad may comprise a first circumferential surface having a profile that defines a part circular segment of a first fixed radius for contact with a complementary first circumferential abutment surface.

Advantageously this may enable the pivoting action to occur smoothly, and also to provide a large bearing contact area under braking to transmit brake forces loads from the pad to the corresponding support structure.

At least one brake pad may comprise a second circumferential surface, the second circumferential surface may have a profile that may define a part circular segment of a second fixed radius, the second fixed radius being greater than the first fixed radius for contact with a complementary second circumferential abutment surface.

The second radius may substantially coincide with the centre of the first radius.

Advantageously this allows for the second circumferential surface and second abutment surface to additionally have a large bearing contact area under braking to transmit brake force from the pad to the corresponding support structure.

The corresponding support structure may further comprise a radial abutment surface to support the brake pad in a radial direction proximate to the second circumferential abutment surface.

The first circumferential abutment surface may be arranged on a leading side of the disc brake with respect the usual direction of rotation of the rotor.

Advantageously, this orientation means the geometry of the brake pad and corresponding abutment surfaces ensure that in the forward direction of movement of a vehicle to which the disc brake is fitted the forces acting on the brake pad tend to hold the brake pad within the pad support arrangement without additional retention structures coming into use.

The disc brake may further comprise a releasable or removable pad retaining structure proximate a second circumferential abutment surface remote from the fixed centre of rotation.

The retaining structure holds the brake pad in place on those occasions when the vehicle is being braked when manoeuvring in its reverse direction.

Both the first and second brake pads and the corresponding first and second support structures may comprise complementary profiles on circumferential faces thereof so as to permit both brake pads to be inserted into the mounting structures in a circumferential direction of the pad and at an angle to the circumferential direction of the structure and then for both brakes pads to be pivoted about a fixed centre of rotation when a circumferential surface of each brake pad is in contact with complementary circumferential surfaces of the complementary structures to be brought into fitted positions with the structures.

The first and second brake pads may be shaped such that when facing each other in a parallel relationship with friction material facing friction material, the brake pads have mirror symmetry about a plane parallel to friction faces of the brake.

Advantageously this provides that both brake pads may have similar wear characteristics in use.

The first circumferential abutment surface of both brake pads may be arranged on a leading side of the disc brake with respect to the usual direction of rotation of the rotor.

Advantageously this means that both the inboard and outboard pad geometry and corresponding abutment surfaces ensure that in the forward direction of movement of a vehicle to which the disc brake is fitted the forces acting on the brake pads tend to hold the brake pads within the pad support arrangement without additional retention structures coming into use.

At least one brake pad may comprise friction material mounted to a strengthening backplate e.g. of metallic material, and the friction material at the circumferential surfaces of the backplate may follow substantially the same profile as the backplate and stepped in from the circumferential surface by up to approximately 4mm.

Advantageously this provides for efficient use of backplate material.

The friction material may follow substantially the same profile as the backplate around substantially the entire perimeter of the backplate and is stepped in from the circumferential surface of the backplate by up to approx. 4mm.

Advantageously this provides for even more efficient use of backplate material.

A sixth aspect of the present invention provides a brake pad for fitment into a disc brake according to the fifth aspect of the present invention, the brake pad comprising a first circumferential face having a profile that defines a part circular segment having a first fixed radius and a second circumferential face having a second fixed radius, the second fixed radius being greater than the first fixed radius.

The centre of the second radius may substantially coincide with the centre of the first radius.

The first and second brake pads may be dimensioned such that when facing each other the brake pads have mirror symmetry in a parallel spaced relation with friction material facing material about a plane parallel to friction faces of the brake pads and equidistant from both brake pads.

The first and second brake pads may alternatively be dimensioned differently such that at least one of the first and second pads cannot be mounted in a corresponding pad mounting structure of the other of the first and second brake pads.

This arrangement may provide a further fool proofing of pad fitting such that even if one of the pads can be wrongly fitted, the second pad in a replacement kit could not, thereby alerting the fitter to their error.

A seventh aspect of the present invention may provide a method of fitting a brake pad of the fifth aspect of the present invention to a disc brake of the first aspect of the present invention comprising the steps of: inserting the brake pad into the mounting structure in a transverse direction of the pad and at an angle to the circumferential direction of the structure and then pivoting the brake pad about a fixed centre of rotation when a circumferential surface of the brake pad is in contact with a complementary circumferential surface of the structure to bring the brake pad into a fitted position in the structure.

### BRIEF DESCRIPTION OF DRAWINGS

Embodiments of the present invention will now be described, by way of example only, with reference to the accompanying drawings, in which:
Figure 1 is an isometric view of a disc brake, according to an embodiment of the present invention;
Figures 2 and 3 are side views of a brake pad and carrier of the disc brake of Figure 1 in a part-fitted and fitted position respectively;
Figures 4 and 5 are isometric views of the brake pad of the disc brake of Figure 1 from opposing directions;
Figure 6 is a cross-sectional view through the brake pad of Figures 4 and 5 on a plane 6-6;
Figure 7 is an isometric view of a first embodiment of a backplate of the brake pad of Figures 4 to 6;
Figures 8a to 8c are views of a second embodiment of a backplate according to the present invention showing an outer surface, an inner surface and a cross-sectional view on a plane X-X respectively; and
Figure 9 is a view showing an outer surface of a third embodiment of a backplate according to the present invention.

### DETAILED DESCRIPTION

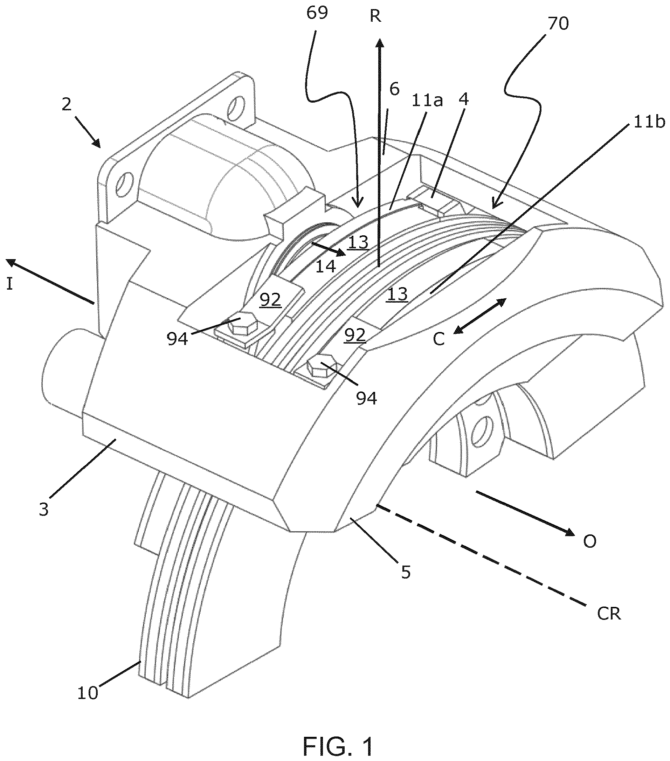

Figure 1 illustrates a disc brake 2 of the present invention. The disc brake 2 incorporates an actuation mechanism (not visible) comprising a single piston and which is suitable for a commercial vehicle. This type of brake is particularly suitable for lighter duty heavy vehicles, for example smaller trucks, or a trailer of a tractor-trailer combination. In other embodiments the disc brake may be a twin piston brake - for example a variant of the applicant's existing ELSA 2 family of disc brakes.

Various orientations of the disc brake are described. In particular the directions inboard I and outboard O refer to the typical orientation of the disc brake when fitted to a vehicle and with reference to the longitudinal centre line of the vehicle. In this orientation the brake pad closest to the centre of the vehicle is the pad directly actuated by an actuation mechanism and being the inboard pad, and the outboard pad being one mounted to a bridge portion of the caliper. Thus inboard can be equated with an actuating side of the disc brake, and outboard with a reaction side. The terms radial (denoted by arrow R) describes an orientation with reference to the centre of the wheel (rotor). Circumferential (denoted by arrow C), or also called tangential, describe orientations with respect to the brake rotor. Radial refers to a direction towards or away from the centre of rotation of the brake rotor, whereas circumferential (C) describes a direction of rotation of the rotor about its centre of rotation (denoted CR).

The disc brake 2 comprises a caliper 3 having a housing 6 to accommodate the actuation mechanism and which is slideably mounted on a carrier 4 for movement in an inboard-outboard direction.

The caliper 3 can slide on the carrier 4 in an inboard-outboard direction, by way of first and second guide pins (not shown) as is well known.

An inboard brake pad 11a comprises a layer of friction material 13 and is arranged so that the friction material 13 faces a brake rotor 10 (also known as a brake disc). The inboard brake pad 11a is mounted on the carrier via an inboard brake pad support structure 69. In this embodiment, the inboard brake pad support structure 69 is a window or recess in brake carrier, described in more detail below. The inboard brake pad 11a is moveable in the direction of arrow 14 against the brake rotor 10.

An outboard brake pad 11b, also with a layer of friction material 13, is also provided. The outboard brake pad 11b is mounted to an outboard brake pad support structure 70 as described in further detail below. Suitable means are provided to urge an outboard brake pad 11b against the opposite side of the rotor 10. In this embodiment, the caliper comprises a bridge 5 arranged so as to straddle the rotor 10 and to transmit the reaction force from an inboard operating shaft (not shown) of the actuating mechanism to the outboard pad 11b. In this embodiment the housing 6 and bridge 5 are manufactured as a single monolithic casting, but in other embodiments, the bridge may be bolted or otherwise secured to the housing.

In this embodiment, a spreader plate (not visible) is provided in the form of an enlarged outboard head of the piston. The main function of the spreader plate is to spread the load applied by the single piston across a greater proportion of the circumferential width of the inboard pad 11a, which is particularly useful for high pressure applications (e.g. an emergency stop), to more evenly distribute the load applied to the pads. There is also an effect on wear; i.e. wear closer to the centre of the pad (where the piston is applied) can be reduced, to provide a more even distribution of wear.

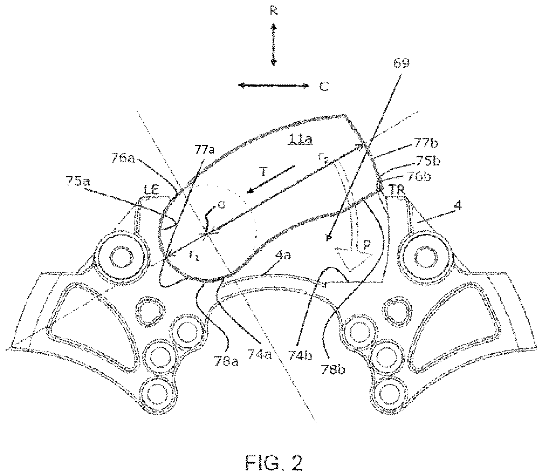

With reference to Figure 2, the carrier 4 has radial pad abutment surfaces 74a, 74b to support the inboard pad 11a in a radial direction. The radial abutment surfaces 74a, 74b are located either side of an arched 'link' portion 4a of the carrier, the link portion 4a connecting the left and right sides of the carrier 4.

The carrier 4 further comprises a first and second circumferential pad abutment surfaces 75a and 75b. The radial pad abutment surfaces 74a, 74b and circumferential pad abutment surfaces 75a and 75b are machined in this embodiment, but they could be forged, or just left as cast as desired.

The circumferential and radial pad abutment surfaces 74a, 74b, 75a and 75b define the inboard pad support structure 69 that is arranged to support the inboard pad 11a in a radially inward and circumferential (i.e. rotational) direction. As the brake is actuated, the abutment surfaces 74a, 74b, 75a and 75b react the torque that is created as the inboard pad 11a clamps the rotor 10. The abutment surfaces also act to locate the inboard brake pad 11a.

The inboard brake pad 11a and the corresponding inboard pad support structure 69 comprise complementary profiles on circumferential faces thereof arranged so as to permit the brake pad to be inserted into the mounting structure in a transverse direction T of the brake pad 11a and at an angle to the circumferential direction C of the structure until the pad abuts the first circumferential abutment surface 75a, and then for the brake pad to be pivoted in a direction P about a fixed centre of rotation X when the first circumferential surface 77a of the brake pad is in contact with the first circumferential abutment surface 75a of the structure to be brought into a fitted position in the structure.

In this embodiment, the first circumferential surface 77a of the inboard brake pad 11a has a profile that defines a part circular segment of a first fixed radius r₁ for contact with the complementary first circumferential abutment surface 75a. It will also be appreciated that in this embodiment a first radial surface 78a of the brake pad is partially contiguous with the first circumferential abutment surface 77a. In other words, because the surface is curved it transmits force with both a circumferential and radial component in some locations.

In addition, the first circumferential abutment surface 75a extends around the first circumferential surface of the inboard brake pad 11a such that a gap distance from the radially outermost tip 76a of the first circumferential abutment surface 75a to the corresponding tip 76b of the second circumferential abutment surface 75b is less than the greatest distance between corresponding points on the two circumferential abutment surfaces 75a, 75b radially inward of the tips. In other words a portion of the first circumferential abutment surface 75a extends radially outwardly above a portion of the brake pad 11a at the first end thereof.

This means that in effect the brake pad is accommodated within a curved undercut defined by the first circumferential abutment surface 75a. This prevents the brake pad 11a being lifted from the inboard pad support structure 69 by it pivoting about the second end of the brake pad , rather than about the first end of the brake pad i.e. only fitting and removal in the way described below is possible when the disc brake 2 is assembled.

The second circumferential surface of the brake pad 77b has a profile that also defines a part circular segment of a second fixed radius r₂. The second fixed radius is greater than the first fixed radius and is arranged to contact the complementary second circumferential abutment surface 75b, which is also part-circular with a similar radius.

In order that the brake pad 11a, when fitted, has a large bearing area in contact with the second circumferential abutment surface 75b for transmitting the brake force under braking, the centre of the second radius r₂ substantially coincides with the centre α of the first radius r₁.
In this embodiment, the second radial surface of the brake pad 78b has a generally planar profile and is arranged to contact the complementary second radial abutment surface 74b, which is also generally planar.

The second radial abutment surface 74b, in contrast to the first, is arranged with a defined angle at its intersection to the second circumferential abutment surface 75b, in order to support the brake pad in a radially inward direction at its second end. In some variants of the carrier (not shown) a stress-relief feature may separate the second radial and circumferential abutment surfaces 74b, 75b, however.

The first circumferential abutment surface 75a is arranged on a leading side (denoted LE) of the disc brake with respect the usual direction of rotation of the rotor 10 (clockwise in Figure 2). The second circumferential abutment surface 75b is arranged on the trailing side (denoted TR). Thus, in the forward direction of movement of a vehicle to which the disc brake 2 is fitted, the forces acting on the brake pad 11a tend to hold the brake pad within the pad support structure without additional retention structures coming into use.

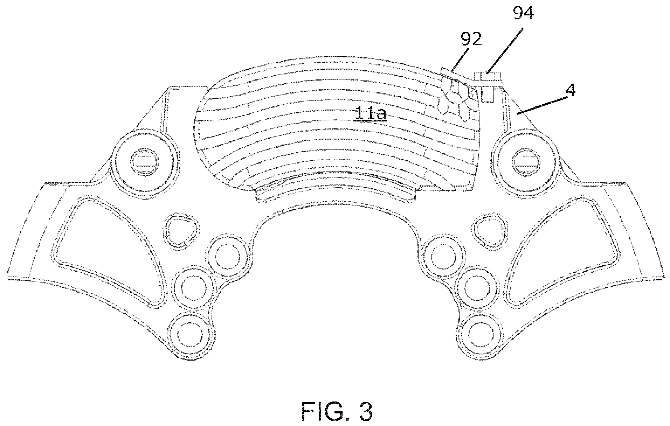

However, since vehicles typically also manoeuvre in a reverse direction (at low speed and for a small proportion of their operating time), the geometry set out above may require a structure to counteract the forces acting on the brake pad 11a when rotation of the rotor 10 is reversed. Thus, as is shown in Figure 3, a pad retainer in the form of a plate 92 is provided, which extends from the second circumferential abutment 75b over part of the radially outer face of the brake pad 11a. A bolt 94 (or other appropriate fastening component) passes through the plate 92 and into a threaded bore in the carrier 4, to releasably secure the plate 92 in place.

In the disc brake 2 of Figure 1 the outboard pad support structure 70 is arranged so as to have a similar geometry of radial and circumferential abutment surfaces 74a, 74b, 75a, 75b in order to receive and support an outboard brake pad 11b with similar or identical shape to the inboard brake pad 11a. In other embodiments, the outboard pad may have a different geometry and this may be advantageous in some circumstances, dependent upon functional requirements of the brake and/or whether some form of "poka-yoke" feature (fool proofing of fitting of pads in inboard and outboard locations) is to be provided.

Thus a fitting operation of the outboard brake pad 11b is similar to that of the inboard brake pad 11a. However, whilst the inboard brake pad 11a is mounted on the carrier 4 of disc brake 2 via the inboard brake pad support structure 69 the outboard brake pad 11b is mounted to the bridge 5 of the caliper 3 by the outboard brake pad support structure 70. As such, the outboard brake pad 11b is supported radially and circumferentially by the caliper 3 when fitted in the outboard brake pad support structure 70. The equivalent radial and circumferential abutment surfaces of the outboard brake pad support structure 70 are provided in a face of the bridge 5 that is adjacent the rotor 10. However, as the position of the outboard pad 11b is fixed inboard-outboard with respect to the bridge 5, the abutment surfaces do not need to be as deep inboard-outboard as in the carrier 4, e.g. they may only be as deep as the corresponding circumferential and radial surfaces on the outboard brake pad 11b.

So as to maintain the benefit of the outboard brake pad 11b being inherently retained in the outboard pad support structure 70 in the normal rotational direction, in this embodiment, the inboard and outboard brake pads 11a, 11b are shaped such that when facing each other in a parallel relationship with friction material facing friction material, the brake pads have mirror symmetry about a plane parallel to friction faces of the brake pads and rotor 10. Thus, when fitted within the disc brake 2 as illustrated in Figure 1, the pads have mirror symmetry about a plane normal to the centre of rotation CR of the rotor 10 at the axial midpoint of the rotor.

This arrangement means that the pad retaining plate 92 for the outboard brake pad 11b is at the same trailing side of the pad as for the inboard brake pad, but is instead secured in a threaded bore on the bridge 5. A benefit of this pad shape is that it inherently provides a poka-yoke feature that prevents an individual pad being fitted in a reversed orientation within its corresponding support structure (i.e. with the backplate rather than friction material facing the rotor.

The friction material 13 of the brake pads 11a and 11b is mounted to a strengthening backplate 16 e.g. of metallic material. The friction material 13 at the circumferential surfaces of the backplate follows substantially the same profile as the backplate 16. However for manufacturing reasons the friction material is stepped in from the entire perimeter surface by up to 4mm. This arrangement optimises the weight to friction material volume ratio of the brake pads, which is made possible by the simple pad retention arrangement in particular. The profile of the friction material and the backplate on the radially outermost and radially innermost edges (intermediate radial surfaces 78a, b) follows as closely as possible the contact area of the rotor so as to maximise the swept pad area.

Fitting of either brake pad 11a, 11b into the caliper is a simple matter of inserting the brake pad into the mounting structure in a transverse direction T of the pad and at an angle to the circumferential direction of the structure and then pivoting the brake pad about a fixed centre of rotation when a circumferential surface of the brake pad is in contact with a complementary circumferential surface of the structure until the brake pad is brought into the fitted position in the structure in which the second radial surface 78b of the brake pad rests on the second radial pad abutment surface 74b. The pad retainer plate 92 may then be secured over the pad 11a, 11b by tightening down the bolt 94. Removal is achieved by the reverse procedure.

The friction material 13 of the brake pads 11a and 11b is mounted to a strengthening backplate 16. The strengthening backplate 16 of the brake pads 11a, 11b must have sufficient strength and integrity to withstand the forces acting on brake pads during braking, and as the vehicle to which the disc brake is fitted travels, e.g. over uneven surfaces.

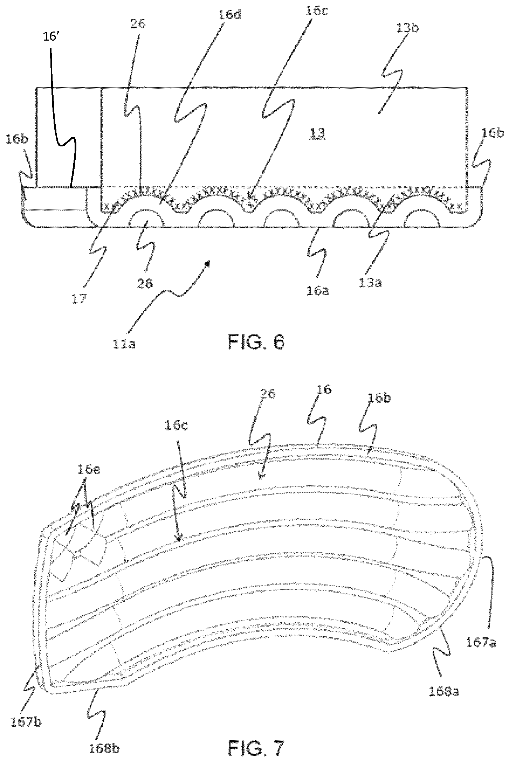

As shown in Figure 6 and 7, the strengthening backplate 16 comprises a rear wall 16a with an inner surface facing towards and for supporting the friction material 13 and an outer, opposing surface facing away from the friction material. When mounted for use, the inner surface faces the brake rotor 10 of the disc brake and the outer surface faces away from the rotor.

The strengthening backplate may comprise at least one stiffening flange extending from the inner surface side of the rear wall. The at least one stiffening flange may surround at least a perimeter portion of the rear wall. The stiffening effect of the flange helps to strengthen the backplate as well as increasing the area in contact with corresponding abutment surfaces of the disc brake 2.

In the embodiment depicted in Figures 3 to 7, the strengthening backplate comprises a stiffening peripheral flange 16b fully encircling the perimeter of the rear wall. The rear wall 16a defines a plane and the stiffening peripheral flange 16b extends substantially perpendicular from the inner surface side of the rear wall. First and second circumferential portions 167a, 167b of peripheral flange define the first and second circumferential surfaces 77a, 77b of the brake pad. First and second radial portions 168a, 168b of the peripheral flange define the first and second radial surfaces 78a, 78b of the brake pad.

The rear wall and at least one stiffening flange form a trough on the friction material side of the brake pad. In the embodiment depicted, the rear wall 16a and peripheral flange 16b define a trough 16c having a tub shape.

The trough is configured to accommodate at least one functional component of the brake pad. The functional component may be selected from a bonding to bond the friction material to the backplate, a thermal insulator to inhibit the transfer heat from the friction material into the backplate of the brake pad, and a noise dampener to absorb noise generated by the brake pad and/or to alter the resonant frequency of the brake pad. The bonding may comprise a steel mesh around which the friction material may be formed.

The trough may additionally accommodate a rear portion of friction material.

In the embodiment depicted in Figures 3 to 7, the friction material is attached to the inner surface of the rear wall 16a using a friction material bonding 17. As shown, a rear portion 13a of the friction material and layer of friction material bonding 17 is located in the trough 16c of the backplate, whilst a front portion 13b of the friction material protrudes from the backplate. The rear portion may be a wear limit portion of the friction material and the outer edge of the flange 16' may define a wear limit of the friction material.

The trough is substantially filled by the at least one functional component (e.g. a bonding, thermal insulator and/or noise dampener), and optionally the rear portion of the friction material. Substantially filling the trough enhances the stiffening of the at least one flange and reduces the risk of plastic deformation during operation. By substantially filling the trough, the friction material at the circumferential surfaces of the backplate follows substantially the same profile as the backplate 16. The friction material is stepped back from the outer perimeter of the backplate by the thickness of the at least one flange. The at least one flange provides additional mechanical contact between the friction material and the backplate, aids bonding and reduces the risk of the friction material becoming separated from the backplate during braking. Further, by filling the trough, the risk of water and other foreign matter entering a gap between the at least one flange and the friction material etc. and causing corrosion is minimised.

By recessing the at least one functional component (e.g. a bonding, thermal insulator and/or noise dampener), and optionally a rear portion of the friction material in the backplate, the thickness of sacrificial friction material in the brake pad that may be worn away in operation can be increased and the lifespan of the brake pad improved.

The backplate 16 may alternatively or additionally comprise at least one stiffening rib to help strengthen the backplate. The at least one stiffening rib is configured to help strengthen the backplate with respect to the forces acting on the brake pad during use. The forces may include, for example, a retaining force from a retainer, an applied load of the piston, an applied clamping force, a drag braking force induced between the friction material and rotor, and/or abutment forces from the abutment surfaces. The at least one stiffening rib may also be configured to change the eigen frequency of the backplate and thereby help to reduce the generation of squeal noise during operation.

The at least one stiffening rib may comprise a recess and/or ridge arranged on the rear wall. The rib may comprise a recess formed in the rear wall 16a of the backplate, preferably on the outer surface of the rear wall. The recess may have any suitable cross-sectional profile including for example, a curved profile, flat-bottomed profile or saw-tooth profile. Preferably, a rib recess shaped on one surface of the rear wall forms a corresponding rib ridge on the opposing surface of the rear wall. For example, a rib recess formed on the outer surface of the rear wall forms a corresponding rib ridge on the inner surface of the rear wall. The ridge may aid the attachment of the insulator, noise dampener and/or friction material in the trough.

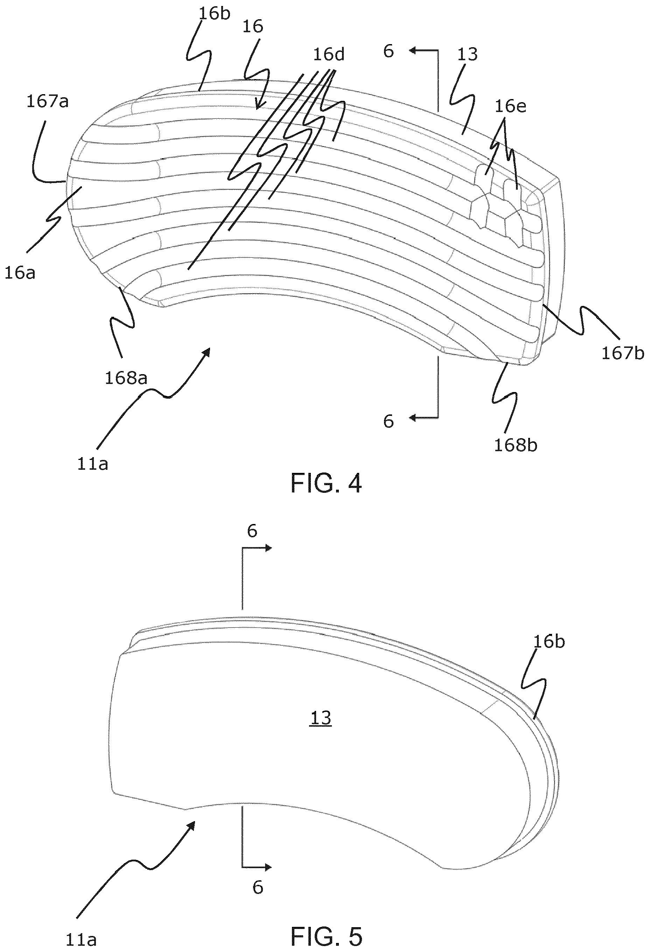

In the embodiment depicted in Figures 3 to 7, the backplate 16 comprises a plurality of elongate stiffening ribs 16d formed in the rear wall 16a to help strengthen the backplate. As shown in the Figures 4, 6 and 7, the ribs are elongate ridges 26 arranged on the inner face of the rear wall facing the friction material 13 and corresponding recesses 28 arranged on the outer face of the rear wall. The ridges 26/recesses 28 have a cross-sectional curved profile.

In this particular embodiment, the elongate stiffening ribs 16d are configured to help strengthen the backplate with respect to an applied load of the piston, an applied clamping force, a drag braking force induced between the friction material and rotor, and/or abutment forces from the abutment surfaces. The elongate stiffening ribs are also configured to tune the backplate and improve its noise behaviour.

To improve the force distribution across the backplate the elongate stiffening ribs 16d extend across the full width of the rear wall 16a. To optimise the reaction of the brake pad to the drag brake force, the elongate stiffening ribs 16d are configured to follow the vector pathway of the tangential drag force acting across the rear wall. To counter abutting forces of the abutment surfaces acting on the brake pad, the elongate stiffening ribs 16d are configured to extend across the rear wall 16a between the first and second circumferential surface portions 167a, 167b of the peripheral flange and between the first and second radial surface portions 168a, 168b of the peripheral flange. To optimise the stiffening effect and help minimise plastic deformation of the backplate at the abutment interface, each stiffening rib is substantially perpendicular to the intersection between the rear wall and peripheral flange.

The backplate may further or alternatively comprise at least one stiffening rib formed in the rear wall that is configured to strengthen the backplate with respect to retaining forces applied by a brake pad retainer. The retaining forces generally act on a localised region of the backplate and so the at least one local stiffening rib is preferably arranged in the region of the rear wall adjacent to the brake pad retainer. To further strengthen the embodiment of the brake pad depicted in Figures 3 to 7 with respect to the retaining forces applied by the pad retainer plate 92, local stiffening ribs 16e are formed in a region of the rear wall adjacent the pad retainer. To optimise the stiffening effect and help minimise plastic deformation of the backplate by the pad retainer each stiffening rib is orientated to extend in a substantially perpendicular direction to the interface between the pad retainer plate 92 and rear wall.

The provision of the at least one flange and/or at least one stiffening rib allows for the thickness of the backplate material to be reduced whilst maintaining a backplate with sufficient strength and integrity to withstand the braking forces and travel forces acting on the vehicle in which the disc brake is fitted.

The enhanced stiffening effect of the at least one flange (e.g. peripheral flange 16b) and/or the at least one stiffening rib (e.g. stiffening ribs 16d, 16e) allows the backplate 16 to be formed from relatively thin sheet metal material.

The sheet metal material preferably has a thickness of approximately 4mm or less. The trough may preferably have a depth of between approximately 5mm to approximately 7mm. Backplates 16 can be formed from a sheet metal, e.g. sheet steel, having a thickness of between approximately 1mm to approximately 4mm, preferably approximately 3mm.

By using relatively thin sheet metal material the overall mass of the backplate is minimised, which in turn leads to environmental and costs benefits. Also, the backplate may be press-formed from the sheet metal material and cheap to manufacture.

In the embodiment depicted in Figures 3 to 7, the backplate 16 is press-formed from a sheet steel plate having a thickness of approximately 3mm, whereby the rear wall and peripheral flange are integrally formed from the same sheet of material as a starting point and the trough has a depth of approximately 7mm.

The backplate is preferably manufactured from a blank of sheet metal plate (normally coils of sheet metal plate) and press-formed between appropriate contoured dies in a press to form the at least one stiffening rib and/or at least one flange. The method of making the backplate comprises the initial step of cutting a blank from sheet metal. The method may further comprise the step(s) of pressing the blank to form ridges/recesses so as to define at least one stiffening ribs and/or drawing the blank in a press to turn the outer edges of the sheet metal to an angle approaching 90° so as to form the rear wall and at least one flange.

In other embodiments, the backplate can be cast, or formed using other suitable processes.

It will be appreciated that numerous changes may be made within the scope of the present invention. For example, the backplate of the present invention is suitable for any brake pad of a disc brake.

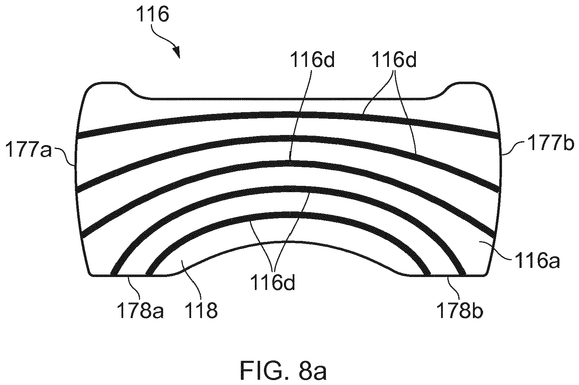

Figures 8a to 8c depict a second embodiment of a backplate 116 for a brake pad of a disc brake comprising a rear wall 116a with an inner surface (117) for supporting friction material (not shown) and an opposing outer surface (118).

In this particular embodiment, the backplate comprises substantially planar first and second circumferential surfaces 177a, 177b to contact corresponding first and second circumferential abutment surfaces of an inboard/outboard pad support structure. The backplate also comprises substantially planar first and second radial surfaces 178a, 178b to contact corresponding first and second radial abutment surfaces of an inboard/outboard pad support structure. The circumferential surfaces of the backplate are circumferential flange portions 121a, 121b extending from the inner surface side of the rear wall. The radial surfaces of the backplate are radial flange portions 122a, 122b extending from the inner surface side of the rear wall. In this particular embodiment, the circumferential flange portions and corresponding radial flange portion are contiguous. The flanges provide a stiffening effect on the backplate that advantageously helps to strengthen the regions of the backplate that are in contact with the abutment surfaces. The flanges and rear wall also define a trough in which at least one functional component of the brake pad may be accommodated between the inner surface and friction material.

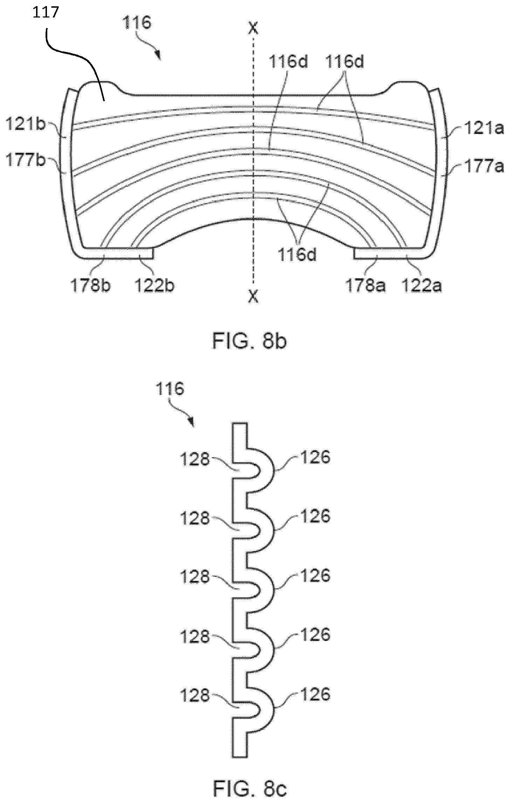

In the embodiment depicted, the backplate comprises a plurality of elongate ribs 116d formed in the rear wall. Each stiffening rib comprises an elongate recess 128 formed on the outer surface of the rear wall (see Figures 8a and 8c) and a corresponding elongate ridge 126 on the inner surface of the rear wall (see Figures 8b and 8c). The recess/ridge may have any suitable cross-sectional profile. In the cross-sectional view along X-X (see Figure 8c), it is shown how the elongate recess 128/ridges 126 have a curved cross-sectional profile. The ridges on the inner surface may aid the bonding of the at least one functional component to the inner surface of the rear wall.

To help strengthen the rear wall and help distribute the forces across the rear wall region, the elongate ribs are configured to extend the full width of the rear wall between the first and second circumferential surfaces 177a, 177b and first and second radial surfaces 178a, 178b. To help withstand tangential drag forces, the elongate ribs 116d are configured to follow the vector pathway of the drag forces acting on the rear wall during braking. To further enhance the stiffening effect and minimise plastic deformation by abutments of the disc brake, the stiffening ribs 116d are substantially perpendicular at the first and second circumferential surfaces and first and second radial surfaces.

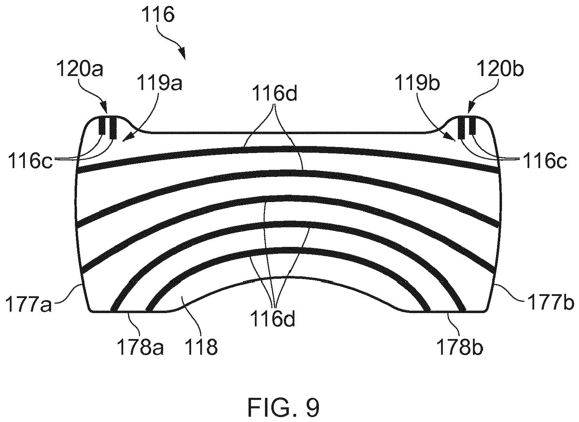

If a brake pad is to be held within the disc brake by a pad retainer then the backplate may comprise one or more localised stiffening ribs to strengthen the rear wall with respect to a retaining force applied by the pad retainer. The configuration of the localised stiffening rib is dependent on the type and arrangement of the pad retainer with respect to the backplate. In a third embodiment of a backplate for a brake pad of a disc brake depicted in Figure 9, the backplate 116, having the features of the second embodiment shown in Figures 8a to 8c, further comprises localised stiffening ribs 116c formed in a first region of the rear wall 119a and a second region of the rear wall 119b adjacent to where corresponding first and second ends of a leaf spring retainer (not shown) will contact and urge the backplate in a radially inward direction. Each localised stiffening rib comprises a recess formed on the outer surface of the rear wall and a corresponding ridge on the inner surface of the rear wall to aid the bonding of the friction material. The recess may have any suitable cross-sectional profile. To optimise the stiffening effect and help minimise plastic deformation by the leaf spring pad retainer, the stiffening ribs 116c preferably extend in a substantially perpendicular direction in the rear wall with respect to the first interface point 120a and second interface point 120b where the leaf spring retainer will contact the rear wall.

## Claims

1. A backplate for a brake pad of a disc brake, wherein the backplate comprises:
a rear wall comprising an inner surface to support a friction material and an opposing, outer surface; and
at least one stiffening rib formed on the outer surface of the rear wall.

2. The backplate according to claim 1, further comprising: a first side surface for contacting a first abutment of the disc brake; and an opposing, second side surface for contacting an opposing, second abutment of the disc brake;
optionally wherein the at least one stiffening rib comprises at least one first elongate rib formed on the outer surface of the rear wall and extending at least substantially between the first side surface and the second side surface of the backplate;
optionally further comprising: a third side surface to contact a third abutment of the disc brake; and an opposing, fourth side surface to contact an opposing, fourth abutment of the disc brake;
optionally wherein the at least one stiffening rib further comprises at least one second elongate rib formed on the outer surface of the rear wall and extending at least substantially between the third side surface and the fourth side surface of the backplate.

3. The backplate according to claim 1 or claim 2, wherein the at least one stiffening rib is an elongate rib formed on the outer surface of the rear wall following at least a portion of a vector pathway of a drag braking force that will act on the rear wall during use; or
wherein the at least one stiffening rib formed on the outer surface of the rear wall is orientated to substantially perpendicularly intersect the first side surface and/or second side surface.

4. The backplate according to any preceding claim, wherein the backplate further comprises an interface for forming a mating contact with a pad retainer; and the at least one stiffening rib comprises at least one localised rib formed in a region of the outer surface of the rear wall adjacent the interface;
optionally wherein the at least one localised rib formed in the region of the outer surface of the rear wall adjacent the interface is orientated to substantially perpendicularly intersect the interface.

5. The backplate according to any preceding claim, wherein the at least one stiffening rib formed on the outer surface of the rear wall is configured to tune the backplate.

6. The backplate according to any preceding claim, wherein the at least one stiffening rib is a ridge and/or recess formed in the outer surface of the rear wall;
optionally wherein the at least one stiffening rib is a recess formed in the outer surface of the rear wall and a corresponding ridge formed in the inner surface of the rear wall.

7. The backplate according to any preceding claim, further comprising: a first side surface for contacting a first abutment of the disc brake; and an opposing, second side surface for contacting an opposing, second abutment of the disc brake and wherein: the first side surface of the backplate is a first side edge portion of the rear wall; and the second side surface of the backplate is an opposing, second side edge portion of the rear wall;
optionally wherein the first side surface is a first circumferential side edge portion of the rear wall and the second side surface is an opposing, second circumferential side edge portion of the rear wall;
optionally further comprising: a third side surface to contact a third abutment of the disc brake; and an opposing, fourth side surface to contact an opposing, fourth abutment of the disc brake and wherein: the third side surface of the backplate is a third side edge portion of the rear wall; and the fourth side surface of the backplate is an opposing, fourth side edge portion of the rear wall;
optionally wherein the third side surface is a first radial side edge portion of the rear wall and the fourth side surface is an opposing, second radial side edge portion of the rear wall.

8. The backplate according to any preceding claim, further comprising at least one stiffening flange extending from the inner surface side of the rear wall;
optionally wherein the at least one stiffening flange is a peripheral flange substantially extending around the perimeter of the rear wall;
optionally further comprising: a first side surface for contacting a first abutment of the disc brake; and an opposing, second surface for contacting an opposing, second abutment of the disc brake and wherein the at least one stiffening flange comprises: a first circumferential flange portion defining the first side surface of the backplate; and a second circumferential flange portion defining the second side surface of the backplate;
optionally further comprising: a third side surface to contact a third abutment of the disc brake; and an opposing, fourth side surface to contact an opposing, fourth abutment of the disc brake and wherein the at least one stiffening flange comprises: a third radial flange portion defining the third side surface of the backplate; and a fourth radial flange portion defining the fourth side surface of the backplate.

9. The backplate according to claim 8, further comprising: a first side surface for contacting a first abutment of the disc brake; and an opposing, second surface for contacting an opposing, second abutment of the disc brake and wherein the at least one stiffening flange comprises: a first circumferential flange portion defining the first side surface of the backplate; and a second circumferential flange portion defining the second side surface of the backplate; and wherein the first circumferential flange portion and third radial flange portion are contiguous; and/or the second circumferential flange portion and fourth radial flange portion are contiguous.

10. The backplate according to claim 9, wherein the rear wall and at least one stiffening flange define a trough for accommodating at least one functional component of a brake pad between the inner surface of the rear wall and the friction material;
optionally wherein the at least one functional component is selected from the group of a friction material bonding, thermal insulator and noise dampener; and/or
wherein the trough is further configured to accommodate a rear portion of the friction material, optionally wherein an edge of the trough defines a wear limit for the friction material and the rear portion is a wear limit portion of friction material.

11. A method of forming a backplate for a brake pad of a disc brake according to any one of claims 1 to 10, the method comprising pressing at least one ridge and/or recess in a blank of sheet metal material to form at least one stiffening rib;
optionally further comprising pressing to turn a border region of the blank of sheet metal at an angle from a central rear wall region to form at least one flange extending from an inner surface of the rear wall.

12. A brake pad for a disc brake comprising: a backplate formed from sheet metal material having a thickness of approximately 4mm or less, the backplate comprising a rear wall, a flange and a trough defined by the rear wall and the flange; a friction material supported by the flange side of the rear wall; and at least one functional component arranged in the trough between the rear wall and friction material.

13. The brake pad according to claim 12, wherein the at least one functional material is selected from the group of a friction material bonding, thermal insulator and noise damper;
optionally wherein the flange is a flange portion extending around a perimeter portion of the rear wall and extending from an inner surface side of the rear wall;
optionally wherein the flange is a peripheral flange extending around the perimeter of the rear wall and extending from an inner surface side of the rear wall.

14. The brake pad according to claim 12 or claim 13, further comprising at least one stiffening rib formed on an outer surface of the rear wall;
optionally wherein the at least one stiffening rib is a recess formed in an outer surface of the rear wall and corresponding rib formed on the inner surface of the rear wall; and/or
wherein the at least one stiffening rib comprises an elongate rib extending substantially across the outer surface of the rear wall between: a first side surface and an opposing, second side surface of the backplate; or a third side surface and an opposing, fourth side surface of the backplate;
optionally wherein the elongate rib is orientated to perpendicularly intersect: the first side surface and/or opposing, second side surface; or the third side surface and/or opposing, fourth side surface;
optionally wherein the elongate rib follows at least a portion of a vector pathway across the outer surface of the rear wall.

15. The brake pad according to claim 14, wherein the at least one stiffening rib comprises a localised rib arranged in a region of the rear wall adjacent to a pad retainer interface;
optionally wherein the at least one stiffening rib is configured to tune the backplate.
